(19) Europäisches Patentamt
European Patent Office
Office européen des brevets

(11) **EP 3 726 724 B1**

(12) **EUROPÄISCHE PATENTSCHRIFT**

(45) Veröffentlichungstag und Bekanntmachung des Hinweises auf die Patenterteilung:
**13.12.2023  Patentblatt 2023/50**

(21) Anmeldenummer: **19169181.5**

(22) Anmeldetag: **15.04.2019**

(51) Internationale Patentklassifikation (IPC):
**H02P 9/00** (2006.01)   **H02H 9/04** (2006.01)

(52) Gemeinsame Patentklassifikation (CPC):
**H02P 9/00;** H02H 9/007; Y02E 10/72; Y02E 10/76

(54) **VORRICHTUNG ZUR ERZEUGUNG ELEKTRISCHER ENERGIE UND VERFAHREN**

DEVICE FOR CREATING ELECTRICAL ENERGY AND METHOD

DISPOSITIF DE PRODUCTION D'ÉNERGIE ÉLECTRIQUE ET PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.10.2020  Patentblatt 2020/43**

(73) Patentinhaber: **ConverterTec Deutschland GmbH 47906 Kempen (DE)**

(72) Erfinder: **Kretschmann, Jörg 47906 Kempen (DE)**

(74) Vertreter: **Cohausz & Florack Patent- & Rechtsanwälte Partnerschaftsgesellschaft mbB Bleichstraße 14 40211 Düsseldorf (DE)**

(56) Entgegenhaltungen:
DE-A1- 10 156 694     DE-A1-102007 004 835
DE-A1-102007 048 547     US-A1- 2013 063 855

**Beschreibung**

Die Erfindung betrifft eine Vorrichtung zur Erzeugung elektrischer Energie, insbesondere eine Windenergieanlage, mit mindestens einem Generator, wobei der Generator elektrische Energie über mehrphasige, maschinenseitige Verbindungsmittel bereitstellt und mit mindestens einem Umrichter mit Gleichspannungszwischenkreis über die mehrphasigen, maschinenseitigen Verbindungsmittel elektrisch verbunden ist. Darüber hinaus betrifft die Erfindung ein Verfahren zum Betreiben einer Vorrichtung zur Erzeugung elektrischer Energie, insbesondere eine Windenergieanlage.

Gattungsgemäße Vorrichtungen zur Erzeugung elektrischer Energie, beispielsweise Windenergieanlagen weisen einen die elektrische Energie erzeugenden Generator auf, welcher von einer weiteren Energiequelle gespeist wird, so dass dieser elektrische Energie erzeugen kann. Bei Windenergieanlagen sind dies die Windrotoren, die den Generator antreiben. Die elektrische Energie wird bei den heute eingesetzten Windenergieanlagen über Umrichter in das elektrische Netz eingespeist. Umrichter enthalten Leistungsschalter, welche den von der Maschinenseite des Umrichters eingehenden mehrphasigen, z.B. dreiphasigen Wechselstrom des Generators in einen Gleichspannungszwischenkreis einspeisen und aus diesem an die Netzfrequenz und Netzspannung angepassten Wechselstrom netzseitig erzeugen und in das Netz einspeisen.

Aus Platzgründen aber häufig auch aus Sicherheitsgründen sind Generator und Umrichter in der Regel räumlich getrennt angeordnet. Bei Windenergieanlagen ist der Platzbereich in der Gondel, in welcher der Generator angeordnet sein muss, beschränkt, so dass der oder die Umrichter häufig im oder am Fuß der Windenergieanlage angeordnet sind. Hierdurch ergeben sich lange elektrische Verbindungswege zwischen Generator und Umrichter. Für die elektrischen Verbindungen werden maschinenseitig mehrphasige Verbindungsmittel eingesetzt, welche sowohl durch Kabel als auch durch Stromschienen realisiert sein können. Oft wird auch eine Kombination aus Kabel und Stromschienen für die mehrphasigen maschinenseitigen Verbindungsmittel verwendet. Beispielsweise können die mehrphasigen, maschinenseitigen Verbindungsmittel zunächst vom Generator in den Turm der Windenergieanlage als Kabelstrecke ausgeführt sein. Die Kabelstrecke kann leichter der Rotation der Gondel folgen. Anschließend werden die mehrphasigen, maschinenseitigen Verbindungsmittel als Stromschienen ausgebildet, da diese auf einfache Weise in dem Bauteile des Turms bereits vorkonfektioniert werden können, so dass nur noch die einzelnen Bauteile des Turms elektrisch miteinander verbunden werden müssen. Weiter werden die mehrphasigen, maschinenseitigen Verbindungsmittel häufig wieder über Kabelstrecken an den maschinenseitigen Anschluss des Umrichters geführt. Aufgrund des geometrischen Aufbaus von Kabeln und Stromschienen entstehen parasitäre Induktivitäten und Kapazitäten, die zu ungewollten Spannungsspitzen im Betrieb der Vorrichtung bzw. der Windenergieanlage am maschinenseitigen Eingang des Umrichters führen können. Die Spannungsspitzen treten zwischen den einzelnen Phasen und dem Nullpotential auf, wobei der dominante Anteil vom Nullsystem gebildet wird. Mit- und Gegensystem haben nur einen untergeordneten Anteil an diesen Spannungsspitzen. Die Begriffe Nullsystem, Mitsystem und Gegensystem sind dem Fachmann als symmetrische Komponentenzerlegung bekannt und werden hier nicht im Detail weiter erläutert.

Es ist zwar bekannt generatorseitig des Umrichters diesen Effekt der parasitären Induktivitäten und Kapazitäten über sogenannte dU/dt-Filter zu vermeiden. Diese generatorseitigen dU/dt-Filter sind jedoch üblicherweise sowohl für das Mit-, das Gegen- und Nullsystem bei gleichzeitig deutlich niedrigeren parasitären Induktivitäten und Kapazitäten der Verbindungsmittel vorgesehen, so dass diese auf Frequenzen im Bereich 1 MHz ausgelegt sind. dU/dt-Filter sollen bei geringen parasitären Kapazitäten und Induktivitäten zudem die Flankensteilheit der Spannung auf bestimmte Werte begrenzen. Hierzu weisen dU/dt-Filter in vielen üblichen Ausführungsformen optimierte Bauformen mit relativ geringen Induktivitäten im Nullsystem auf, so dass Überspannungen gegen Nullpotential der maschinenseitigen Verbindungsmittel in der Regel nicht beeinflusst werden. Auch die Auswahl eines spezifischen Ansteuerungsmusters für die einzelnen Leistungsschalter der Umrichter, beispielsweise durch Verzögerung von einzelnen Schaltimpulsen, um den spezifischen Spannungssprüngen entgegenzuwirken, hat zu keiner Verringerung der Überspannung geführt, da die Überspannungen dann für andere Schaltzustände des Umrichters auftraten. Eine deutliche Verringerung der Überspannungen kann zwar durch eine Verringerung der parasitären Induktivitäten und Kapazitäten der maschinenseitigen Verbindungsmittel erreicht werden. Dies führt aber als technische Zusatzanforderung an die Verbindungsmittel in der Regel zu erhöhten Kosten..

Aus der US-Patentschrift US 9,500,182 B2 ist nun bekannt, induktive Asymmetrien zwischen den einzelnen Phasen des Wechselstromsystems von Windenergieanlagen über induktive Kompensationseinrichtungen auszugleichen. Durch die Wahl einer geeigneten Eigen- und Gegen-Induktivität des Kompensationsmittels wird die Asymmetrie des mehrphasigen Wechselstromsystems einer Windenergieanlage reduziert bzw. kompensiert. Im Ergebnis sollen schwankende Spannungen im Gleichspannungszwischenkreis der verwendeten Umrichter vermieden werden und eine verbesserte Leistungsabgabe mit symmetrischen Strömen erfolgen. Die von der Anmelderin gemessenen Spannungsschwankungen führen jedoch nicht zu einer pulsierenden Gleichspannung im Gleichspannungszwischenkreis der Umrichter, sondern treten im Nullsystem auf. Dieses Problem wird in der US-Schrift nicht angesprochen.

Aus der US-amerikanischen Offenlegungsschrift US 2015/0123402 A1 ist darüber hinaus bekannt, in einem Batteriespeichersystem auftretende Überspannungen im DC-Bus durch die Bereitstellung von gekoppelten Induktivitäten im DC-System vorzusehen. Die Erfindung betrifft allerdings Überspannungen im maschinenseitigen Wechselspannungssystem einer Vorrichtung zur Erzeugung elektrischer Energie bzw. einer Windenergieanlage.

Die DE10156694A1 offenbart einen von Windkraft angetriebenen elektrischen Generator, der über drei Phasen und einen Nulleiter mit einem Umrichter verbunden ist.

Der vorliegenden Erfindung liegt daher die Aufgabe zu Grunde, eine Vorrichtung zur Erzeugung elektrischer Energie, insbesondere einer Windenergieanlage bereitzustellen, welche trotz parasitärer Induktivitäten und Kapazitäten der maschinenseitigen, mehrphasigen Verbindungsmittel die Entstehung von Überspannungen zuverlässig vermeidet.

Erfindungsgemäß wird die aufgezeigte Aufgabe für eine Vorrichtung zur Erzeugung elektrischer Energie, insbesondere für eine Windenergieanlage dadurch gelöst, dass Mittel zur Dämpfung mindestens einer, vorzugsweise der ersten Serienresonanz im Nullsystem der maschinenseitigen Verbindungsmittel zwischen Generator und Umrichter vorgesehen sind. Vorzugsweise wird die erste Serienresonanz gedämpft.

Der Erfinder hat aus Modellrechnungen zu den maschinenseitigen, mehrphasigen Verbindungsmitteln erkannt, dass in den mehrphasigen, maschinenseitigen Verbindungsmitteln zwischen Generator und Umrichter die detektierten Überspannungen durch eine nicht gedämpfte Serienresonanz im Nullsystem, insbesondere durch die erste Serienresonanz entstehen. Sind Mittel zur Dämpfung dieser mindestens einen Serienresonanz im Nullsystem der maschinenseitigen Verbindungsmittel vorgesehen, wird die Resonanzstelle im Frequenzband entsprechend gedämpft und die Überspannungen stark reduziert. Es hat sich herausgestellt, dass die Serienresonanz durch Schaltvorgänge der Leistungsschalter der Umrichter, bei welchen ein breitbandiges Spektrum im Frequenzbereich bzw. steile Spannungs-Flanken im Zeitbereich in den Verbindungsmitteln aufgeschaltet werden, dazu führt, dass diese durch übliche Dimensionierung der dU/dt-Filter nicht gedämpfte Serienresonanz angeregt wird und zu den gemessenen Überspannungen führt. Eine Dämpfung dieser Serienresonanz führt im Ergebnis zu deutlich verringerten Überspannungen auf einen Wert, der für die elektrische Belastung der maschinenseitigen Verbindung zwischen Umrichter und Generator zulässig ist. Die Erfindung ist hinsichtlich des technischen Aufwands besonders dann effektiv, wenn der Wert der parasitären Induktivitäten und Kapazitäten der maschinenseitigen Verbindung zwischen Umrichter und Generator erheblich höher ist als für eine übliche Dimensionierung des dU/dt-Filters vorausgesetzt.

Gemäß einer ersten Ausgestaltung weisen die Mittel zur Dämpfung der mindestens einen, vorzugsweise der ersten Serienresonanz im Nullsystem der maschinenseitigen Verbindungsmittel mindestens einen in das Nullsystem der maschinenseitigen Verbindungsmittel magnetisch eingekoppelten Serienwiderstand auf. Dieser Serienwiderstand im Nullsystem der maschinenseitigen Verbindungsmittel führt zu einer ausreichenden Dämpfung der Serienresonanz bei relativ geringer zusätzlicher Verlustleistung. Die Verlustleistung beträgt für eine ausreichende Dämpfung weniger als 2 kW bei einer Leistungsabgabe von mehreren Megawatt.

Vorzugsweise weist der mindestens eine magnetisch eingekoppelte Serienwiderstand im Nullsystem einen elektrischen Widerstand R auf, für den zur Festlegung der Dämpfung folgende Beziehung sinnvoll definiert wird:

$$R = d * \sqrt{\frac{L}{C}} \qquad\qquad (1)$$

wobei L die Induktivität und C die Kapazität der maschinenseitigen Verbindungsmittel zwischen Generator und Umrichter sind und d der Proportionalitätsfaktor der Dämpfung ist, wobei für d gilt

$$0{,}25 \leq d \leq 1{,}8 . \qquad\qquad (2)$$

Durch die Wahl des Serienwiderstandswertes entsprechend der zuvor genannten Gleichung (1) unter Berücksichtigung eines Proportionalitätsfaktors d im Bereich von 0,25 bis 1,8 wird eine gute Dämpfung der Serienresonanz erzielt. Entsprechende Widerstandswerte betragen beispielsweise maximal 10 Ω, bevorzugt 1 bis 5 Ω. Bevorzugt wird der mindestens eine magnetisch eingekoppelte Serienwiderstand im Nullsystem der maschinenseitigen Verbindungsmittel über mindestens einen magnetischen Kern eingekoppelt, sodass auf einfache Weise eine Dämpfung der Serienresonanz der maschinenseitigen Verbindungsmittel erzielt wird.

Der mindestens eine magnetische Kern umschließt vorzugsweise gemäß einer weiteren Ausgestaltung den Null-Leiter der maschinenseitigen Verbindungsmittel zwischen Umrichter und Generator zur magnetischen Einkopplung des Serienwiderstands. Das Umschließen des Null-Leiters führt dazu, dass der magnetische Kern das durch den Stromfluss im Nullsystem erzeugte Magnetfeld zwischen Umrichter und Verbindungsmitteln zum Generator verstärkt. Dabei kann ein Umschließen auch bedeuten, dass der magnetische Kern als Ring um den Null-Leiter mit oder ohne einen Spalt ausgebildet ist. Über den Null-Leiter der maschinenseitigen Verbindungsmittel werden keine hohen Leistungen bzw. Ströme geführt, deshalb sind die entstehenden Magnetfelder und damit auch die Verlustleistungen im Serienwiderstand gering im Vergleich zu den Magnetfeldern, die durch die Ströme der Hauptverbindungsleitern, also der Leistungsphasen entstehen. Aus diesem Grund ist der Null-Leiter auch in der Regel in den geometrischen Abmessungen klein ausgebildet und leicht mit einem magnetischen Kern zu umschließen. Die Anordnung des magnetischen Kerns zur Umschließung des Null-Leiters erfordert insofern nur einen verhältnismäßig geringen Aufwand.

Ist der Null-Leiter der maschinenseitigen Verbindungsmittel zumindest bereichsweise als Kabel und/oder als Stromschiene ausgebildet, kann der mindestens eine magnetische Kern auf einfache Weise mindestens in einem dieser Bereiche angeordnet sein, um den Serienwiderstand magnetisch einzukoppeln.

Gemäß einer ersten Variante der magnetischen Einkopplung weist der mindestens eine magnetische Kern Elektroblech auf, wobei optional ein Luftspalt zur Bereitstellung eines spezifischen magnetischen Widerstands des magnetischen Kerns vorgesehen ist. In der Variante des magnetischen Kerns aus Elektroblech ist der Frequenzbereich für den zu übertragenden Strom begrenzt, so dass der entsprechende magnetische Kern bereits bei hohen Frequenzen dämpfend wirkt.

Aufgrund des magnetischen Widerstandes im Bereich des Luftspalts wird zudem eine spezifische Induktivität und damit ein spezifischer Serienwiderstand über den magnetischen Kern bereitgestellt. In diesem Fall entsteht im gesamten magnetischen Kern Verlustwärme aufgrund der Resonanzdämpfung. Der Elektroblech aufweisende magnetische Kern ist spezifisch zu seinem Gewicht besonders kostengünstig in seiner Herstellung, leicht verfügbar, benötigt aber besondere Kühlungsmaßnahmen, da die Wärme im gesamten magnetischen Kern frei wird. Außerdem sind dessen Abmessungen mit Rücksicht auf seine elektrischen Eigenschaften größer zu wählen im Vergleich zu anderen magnetischen Materialien.

Gemäß der zweiten Ausführungsform besteht der magnetische Kern aus einem anderen weichmagnetischen Vollmaterial, vorzugsweise Ferrit, wobei der mindestens eine magnetische Kern mindestens eine Spule aufweist, deren Wicklungsanschlüsse über mindestens einen Serienwiderstand miteinander verbunden sind. Weichmagnetische Vollmaterialien weisen geringe Koerzitivfeldstärken auf. Die Dämpfungseigenschaften von Ferrit sind aufgrund seiner wesentlich niedrigeren Verluste aufgrund geringer Koerzitivfeldstärken gering. Aus diesem Grund ist auf dem weichmagnetischen Kern eine Spule angeordnet, die mit einem Serienwiderstand verbunden ist. In der Spule wird durch das wechselnde Magnetfeld im magnetischen Kern eine Spannung erzeugt, die über den Serienwiderstand zu einem Stromfluss führt. Durch die Auswahl der Anzahl der Wicklungen der Spule, zumeist weniger als 10, z.B. 2 bis 6 und durch die Auswahl des Serienwiderstands kann die Dämpfungsleistung dieser Anordnung sehr genau eingestellt werden. Hiermit kann die Reduktion der Spannungsspitzenwerte gemäß Gleichung (1) sehr genau eingestellt werden.

Der Widerstand des Serienwiderstands beträgt wenige $\Omega$, beispielsweise maximal 10 $\Omega$, so dass auf Standardbauelemente zurückgegriffen und die Kosten der Anordnung stark reduziert werden können. Die Dämpfungsleistung wird im Wesentlichen in Wärme über den Serienwiderstand umgewandelt. Gleichzeitig kann der Widerstand exakt auf die zu erwartende Dämpfungsleistung und damit auf die zu erwartende Verlustleistung abgestimmt werden. Bei einer geringen zu erwartenden Verlustleistung kann die natürliche Konvektion zur Kühlung des Serienwiderstands ausreichend sein, so dass keine zusätzlichen Kühlmittel benötigt werden.

Ist der mindestens eine Serienwiderstand gemäß einer weiteren Ausgestaltung bevorzugt auf Kühlmitteln angeordnet und optional im Widerstandswert variabel einstellbar, können auch höhere Verlustleistungen in Form von Wärme sicher abgeführt werden. Ein variabel einstellbarer Serienwiderstand erlaubt es dabei, den Serienwiderstand erst vor Ort, z. B. nach dem Aufbau einer Windenergieanlage, an unterschiedliche Gegebenheiten nachträglich einzustellen und damit eine Optimierung der Dämpfung der Serienresonanz bei gleichzeitig geringen Verlusten zu ermöglichen. Die Kühlmittel, auf welchen der Serienwiderstand angeordnet ist, können aktive, beispielsweise von Kühlmedium durchflossene Kühlmittel oder passive, beispielsweise lediglich als Kühlkörper ausgebildete Kühlmittel sein. Die Dimensionierung dieser Kühlmittel erlaubt es, die berechnete Verlustleistung am Serienwiderstand über die Kühlmittel mit geringem Aufwand sicher abzuführen.

Vorzugsweise sind die maschinenseitigen Verbindungsmittel so dimensioniert, dass die Serienresonanz der Verbindungsmittel im System unterhalb einer Frequenz von 500 kHz, bevorzugt unterhalb einer Frequenz von 150 kHz auftritt. Die Serienresonanz ergibt sich näherungsweise aus der Gleichung:

$$\omega = \frac{1}{\sqrt{LC}} \tag{3}$$

Die Kapazität C und die Induktivität L der maschinenseitigen Verbindungsmittel ergeben sich aus den geometrischen Abmessungen der maschinenseitigen Verbindungsmittel sowie deren Anordnung, beispielsweise im Turm der Windenergieanlage. Treten die Serienresonanzen im Nullsystem unterhalb einer Frequenz von 500 kHz auf bzw. unter einer Frequenz von 150 kHz auf, so können die Resonanzen nicht über die üblicherweise vorgesehenen Netzfilter (dU/dt-Filter) gedämpft werden. Diese arbeiten, wie bereits ausgeführt, in einem deutlich höheren Frequenzband, etwa bei 1 MHz. Gerade für diese niedrigen Serienresonanzfrequenzen kann die erfindungsgemäße Vorrichtung eine effektive Dämpfung der mindestens einen, vorzugsweise der ersten Serienresonanz bei gleichzeitiger geringer Verlustleistung bereitstellen.

Als erste Serienresonanz(-frequenz) wird die Resonanz(-frequenz) bezeichnet, welche den geringsten Widerstand aufweist, also deren Schwingungen am wenigstens gedämpft werden. Diese tritt in der Regel bei der Resonanz mit der geringsten Frequenz auf. Alle höheren Serienresonanzen weisen üblicherweise auch höhere Dämpfungen auf.

Gemäß einer weiteren Ausgestaltung der Vorrichtung ist die Vorrichtung eine Windenergieanlage, wobei die Windenergieanlage als Generator eine doppeltgespeiste Asynchronmaschine, oder einen Synchrongenerator aufweist. Beide Generatortypen sind über einen maschinenseitigen Umrichter an einen Gleichspannungszwischenkreis und darüber an einen netzseitigen Umrichter angeschlossen, so dass die vom Generator bereitgestellte elektrische Energie in geeigneter Form in das elektrische Versorgungsnetz eingespeist werden kann. Beide Typen von Windenergieanlagen zeichnen sich dadurch durchaus, dass üblicherweise die Umrichter nicht in der Gondel, also in unmittelbarer Nähe des Generators angeordnet sind. Die Umrichter sind daher über lange Verbindungsmittel maschinenseitig mit den Generatoren verbunden, was zu höheren parasitären Induktivitäten und Kapazitäten führen kann. Die Dämpfung mindestens einer, vorzugsweise der ersten Serienresonanz führt bei beiden Anlagentypen insofern zu einem verbesserten Spannungsverhalten am maschinenseitigen Eingang des Umrichters.

Gemäß einer weiteren Lehre der vorliegenden Erfindung wird die oben aufgezeigte Aufgabe durch ein Verfahren zum Betreiben einer Vorrichtung zur Erzeugung elektrischer Energie, insbesondere einer Windenergieanlage dadurch gelöst, dass mindestens eine, vorzugsweise die erste Serienresonanz im Nullsystem der maschinenseitigen Verbindungsmittel zwischen Generator und Umrichter ermittelt wird, abhängig von der ermittelten Serienresonanz ein Serienwiderstand zur Dämpfung dieser Serienresonanz bestimmt wird und dieser Serienwiderstand in das Nullsystem magnetisch eingekoppelt wird.

Wie bereits zuvor ausgeführt erlaubt die Dämpfung der Serienresonanz im Nullsystem über ein magnetisches Einkoppeln eines Serienwiderstands Spannungsspitzen aufgrund der parasitären Induktivitäten und Kapazitäten der maschinenseitigen Verbindungsmittel am Umrichtereingang zu vermeiden und diese stark zu dämpfen. Gleichzeitig kann das Verfahren dabei über die magnetische Einkopplung des Serienwiderstandes eine geringe Verlustleistung bereitstellen.

Die Erfindung soll im Weiteren anhand von Ausführungsbeispielen in Verbindung mit der Zeichnung näher erläutert werden. In der Zeichnung zeigt:

Fig. 1      in einer schematischen Darstellung eine Vorrichtung zur Erzeugung elektrischer Energie in Form einer Windenergieanlage,

Fig. 2      eine Simulation der Spannungsüberhöhung aufgrund einer Serienresonanz in einem Spannungszeitdiagramm einer Phase gegen Null-Potential am maschinenseitigen Eingang des Umrichters,

Fig. 3      ein Ausführungsbeispiel einer Schaltskizze der Verbindungsmittel vom Generator zum Umrichter,

Fig. 4, 5   in einer Schnittansicht sowie in einer Draufsicht ein Ausführungsbeispiel eines magnetisch gekoppelten Serienwiderstands und

Fig. 6      ein weiteres Ausführungsbeispiel eines magnetisch eingekoppelten Serienwiderstands mit einem geblechten magnetischen Kern.

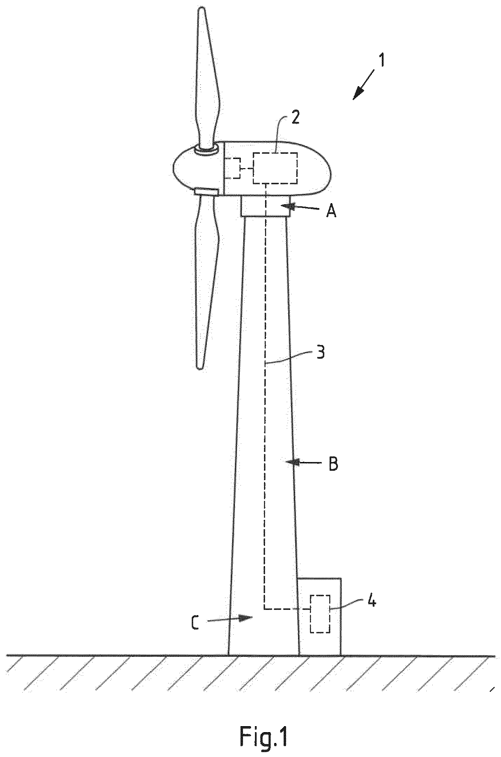

Fig. 1 zeigt eine Vorrichtung zur Erzeugung elektrischer Energie in Form einer Windenergieanlage 1 mit mindestens einem Generator 2, wobei der Generator elektrische Energie über mehrphasige, maschinenseitige Verbindungsmittel 3 mindestens einem Umrichter 4 mit Gleichspannungszwischenkreis bereitstellt. Die in Fig. 1 dargestellten Verbindungsmittel 3 sind maschinenseitig, d.h. zwischen Generator 2 und Umrichter 4 vorgesehen und in der Regel drei-phasig ausgebildet. Die Verbindungsmittel 3 sind im vorliegenden Ausführungsbeispiel in drei Abschnitte A, B und C unterteilt. In den Bereichen A und C sind die Verbindungsmittel 3 als Kabel ausgebildet. Im Bereich B sind die maschinenseitig vorgesehenen Verbindungsmittel 3 als Stromschienen ausgebildet. Stromschienen unterscheiden sich von Kabeln dadurch, dass diese in der Regel keine runden Querschnitte aufweisen, sondern zur Erzielung der Vorteile der Stromschienen, auf einfache Weise bereits vormontierbar zu sein, in der Regel quadratische und insbesondere rechteckige Querschnitte aufweisen. Sie können aufgrund der flächigen Ausdehnung des Querschnitts sehr hohe Ströme auf engem Raum führen. Beispielsweise können Stromschienen ohne weiteres eine Führung des Stroms im rechten Winkel bereitstellen, während Kabel diesen aufgrund der hohen Steifigkeit nicht bereitstellen können. Auch eine Vormontage, beispielsweise im Turm der Windenergieanlage ist mit Kabeln nur schwer zu realisieren. Zudem sind Stromschienen bei hohen zu führenden Leistungen deutlich kostengünstiger als Kabel. Nachteilig bei Stromschienen ist jedoch, dass sich aufgrund der geometrischen Querschnittsform der Stromschienen und ihrer Anordnung im Turm höhere parasitäre Induktivitäten und Kapazitäten einstellen können.

Die geometrische Ausgestaltung der Stromschienen im Bereich B in Verbindung mit der Kabelführung in den Bereichen A und C der maschinenseitig vorgesehenen Verbindungsmittel 3 kann parasitäre Induktivitäten und Kapazitäten nicht verhindern, so dass es insbesondere im Nullsystem, d.h. also der Spannung aller Phasen gegenüber dem Nullpotential oder Erde, zu Resonanzen und somit zu unerwünschten Spannungsschwankungen kommt.

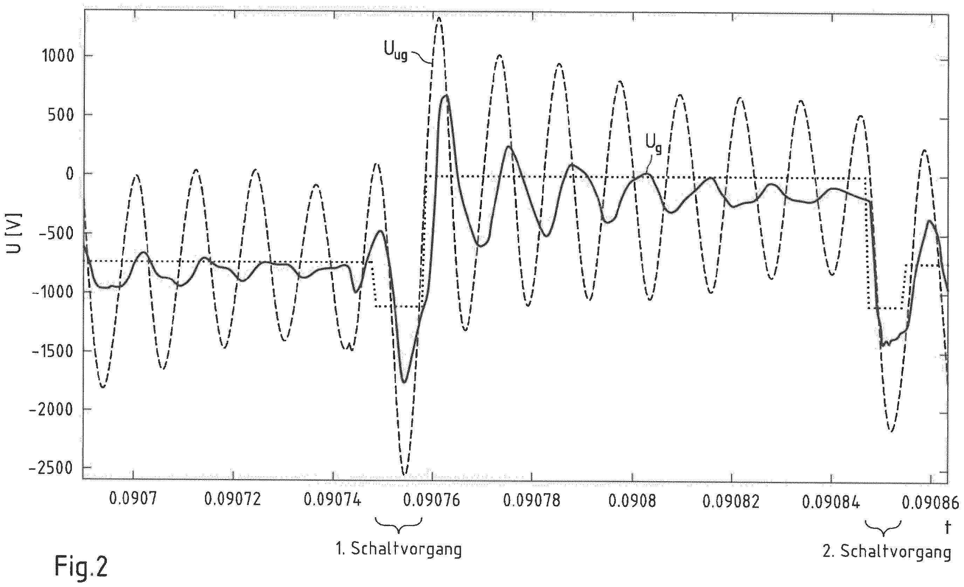

Fig. 2 zeigt in einer Simulation den zeitlichen Verlauf der Spannung an einer Phase des Umrichters 4 gegenüber dem Null-Potential während zweier Schaltvorgänge eines Leistungsschalters des Umrichters 4. Der erste und zweite Schaltvorgang erfolgt idealerweise stufenförmig. Im Diagramm sind ferner der ungedämpfte Verlauf der Spannung $U_{ug}$ als gestrichelte Linie sowie der zeitliche Verlauf der Spannung mit Dämpfung der Serienresonanz $U_g$ als kontinuierliche Linie dargestellt.

Zu erkennen ist, dass die ungedämpfte Spannung $U_{ug}$ gegenüber dem Null-Potential während des ersten Schaltvorgangs ein starkes Überschwingen zeigt und in dem dargestellten Fall Werte zwischen ca. 1300 V und -2500 V annimmt. Die Spannungsspitze kann in Bezug auf die Komponenten des Umrichters aber problematisch sein. Bei Spannungsüberschlägen kann es zu Schäden am Umrichter bzw. an den Verbindungsmitteln zum Generator kommen.

Wie bereits zuvor ausgeführt, hat der Erfinder erkannt, dass Serienresonanzen, insbesondere die erste Serienresonanz im Nullsystem der mehrphasigen Verbindungsmittel 3 die Ursache der Spannungsspitzen sind. Wird diese mindestens eine, vorzugsweise die erste Serienresonanz im Nullsystem der maschinenseitigen Verbindungsmittel 3 zwischen Generator 2 und Umrichter 4 über Mittel zur Dämpfung der Resonanz gedämpft, kommt es zu einer signifikanten Reduktion der Spannungsspitzen. Der entsprechend simulierte Spannungsverlauf $U_g$ in Fig. 2 zeigt, dass der minimale Spannungsspitzenwert von $U_g$ nur bei etwa -1700 V und der maximale Spitzenwert bei +750 V liegt. Das Überschwingverhalten konnte für diesen Schaltvorgang um +900 V bzw. -750 V reduziert werden. Reicht diese Dämpfung nicht aus, kann durch die Wahl eines höheren Proportionalitätsfaktors d eine noch stärkere Dämpfung der Spannungsüberschwingung erreicht werden. Bevorzugt wird die Dämpfung so eingestellt, dass die Spannung $U_g$ Werte annimmt, für die die Eingänge der Umrichter und auch die Verbindungsmittel ausgelegt sind, so dass hier keine Spannungsüberschläge auftreten können und Schäden verhindert werden. Auch beim zweiten Schaltvorgang ist die Dämpfung der Serienresonanz deutlich zu erkennen und zeigt noch kleinere Spannungsspitzenwerte. Die gewünschte Reduktionswirkung auf den Spannungsspitzenwert wird durch Auswahl des Magnetmaterials des Kerns und / oder Wahl des Widerstandswertes und damit über den Proportionalitätsfaktor d eingestellt; die Reduktionswirkung in Fig. 2. ist beispielhaft zu sehen. Gleichzeitig ist trotz der Dämpfung die in Kauf zu nehmende Verlustleistung gering. Sie liegt bei maximal etwa 2 kW.

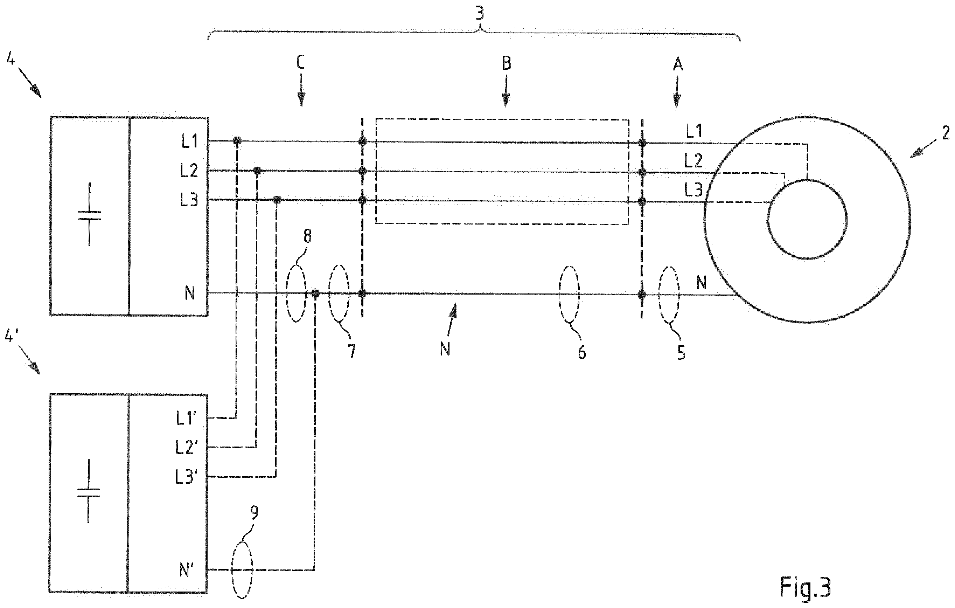

Fig. 3 zeigt eine Schaltskizze der Verbindungsmittel 3 eines Ausführungsbeispiels einer Vorrichtung zur Erzeugung elektrischer Energie, insbesondere einer Windenergieanlage mit einem Generator 2 und einem Umrichter 4 bzw. 4'. Die Verbindungsmittel 3 zwischen Generator 2 und Umrichter 4 bzw. 4' sind dreiphasig L1, L2, L3 bzw. L1', L2', L3' ausgebildet. Gleichzeitig ist der Generator 3 auch über einen Null-Leiter N bzw. N' mit dem Umrichter 4 bzw. 4' verbunden. Der Null-Leiter N, N' ist Teil der maschinenseitigen Verbindungsmittel 3.

Darüber hinaus sind in Fig. 3 die Verbindungsmittel 3 in drei Bereiche A, B und C unterteilt, wobei der Bereich B beispielsweise als Stromschiene z.B. im Turm einer Windenergieanlage ausgebildet ist. Die Bereiche A und C sollen beispielsweise als Kabel ausgeführt sein. Mittel zur Dämpfung der Serienresonanz der Verbindungsmittel 3 im Nullsystem 5, 6, 7, 8 und 9 werden in Fig. 3 ebenso gezeigt, wobei die dargestellten Mittel zur Dämpfung der Serienresonanz 5, 6, 7, 8 und 9 insbesondere die unterschiedlichen, möglichen Positionen der Dämpfungsmittel veranschaulichen sollen. Die Mittel zur Dämpfung der Serienresonanz im Nullsystem 5, 6, 7, 8 und 9 sind im vorliegenden Ausführungsbeispiel als in den Null-Leiter N magnetisch eingekoppelte Serienwiderstände ausgebildet und durch den ringförmigen magnetischen Kern in Fig. 3 symbolisiert.

Die Mittel zur Dämpfung der Serienresonanz 5, 6, 7, 8 und 9 können in den Bereichen A, B und C der Verbindungsmittel vorgesehen sein. Wird im Bereich B beispielsweise der Null-Leiter N durch die metallische Turmwand einer Windenergieanlage realisiert, kann die magnetische Einkopplung der Mittel zur Dämpfung der Serienresonanz in diesem Bereich nicht erfolgen. In diesem Fall kann dann aber auch eine andere Position für die magnetische Einkopplung eines Serienwiderstands 5, 7, 8 oder 9 zur Dämpfung der Serienresonanz, beispielweise in den Kabel geführten Bereichen A und C verwendet werden. Grundsätzlich werden die Kabel geführten Bereiche A und C der Verbindungsmittel 3 bevorzugt zur magnetischen Einkopplung des Serienwiderstands gewählt, da in diesen Bereichen die magnetische Einkopplung des Serienwiderstands auf einfache Weise mit relativ kleinen magnetischen Kernen gelingt.

Der Generator 3 kann, wie in Fig. 3 dargestellt auch mit einem weiteren Umrichter 4' über mehrphasige Verbindungsmittel 3 verbunden werden, wobei drei weitere Phasen L1', L2' und L3' und ein weiterer Null-Leiter N' die elektrische Verbindung zwischen dem Umrichter 4' und dem Generator 3 bereitstellen. Im Null-Leiter N' der Verbindungsmittel zum Umrichter 4' kann zusätzlich ein Mittel zur Dämpfung der Serienresonanz 9 vorgesehen sein. Grundsätzlich reicht es bei parallel betriebenen Umrichtern 4 und 4' auch aus, einen magnetisch eingekoppelten Serienwiderstand 7, 6 oder 5 vor dem Abzweig des parallelen Null-Leiters N' für den Umrichter 4' vorzusehen.

Der Generator in Fig. 3 ist dabei lediglich schematisch dargestellt. Es kann sich bei diesem Generator 3 um einen Synchrongenerator, dessen Stator mit den Umrichtern 4 bzw. 4' verbunden ist, handeln. Der Generator 3 kann aber auch als doppelgespeiste Asynchronmaschine ausgebildet sein, sodass der Generator 2 rotorseitig mit dem Umrichter 4 bzw. 4' über mehrphasige Verbindungsmittel 3 verbunden ist. Um dies anzudeuten, sind die Phasen L1, L2 und L3 am Generator 3 gestrichelt bis zum Rotor durchgezogen.

Der mindestens eine magnetisch eingekoppelte Serienwiderstand im Nullsystem der Schaltungsskizze in Fig. 3 mit Bezugszeichen 5, 6, 7, 8 oder 9 weist einen elektrischen Widerstand auf, für den definiert wird:

$$R = d * \sqrt{\frac{L}{C}} \quad , \qquad\qquad (1)$$

wobei L die Induktivitäten und C die Kapazität der maschinenseitigen Verbindungsmittel zwischen Generator und Umrichters sind, d ist der Proportionalitätsfaktor der Dämpfung. Für Werte von d im Bereich 0,25 bis 1,8 ist der magnetische eingekoppelte Serienwiderstandswert hoch genug, so dass die Serienresonanz im Nullsystem der mehrphasig ausgebildeten Verbindungsmittel sehr gut gedämpft werden kann. Wie bereits ausgeführt, werden bevorzugt Widerstandswerte von weniger als 10 Ω, bevorzugt 1 bis 5 Ω verwendet.

Die Position der Mittel zur Dämpfung der Serienresonanz, beispielsweise die Position des magnetischen Kerns zur Einkopplung des Serienwiderstands kann je nach Gegebenheiten in die verschiedenen Bereiche A, B oder C der mehrphasigen Verbindungsmittel 3 angeordnet sein. Da der Null-Leiter N bzw. N' nicht zur Übertragung großer Energiemengen ausgebildet ist, weist dieser geringere geometrische Abmessungen auf, als die übrigen Leistungsphasen. Die Anordnung eines magnetischen Kerns am Null-Leiter kann daher auf einfache Weise erfolgen. Im Bereich B und C geschieht dies, wie bereits ausgeführt, besonders einfach, da der Null-Leiter N bzw. N' hier als Kabel ausgeführt ist. Denkbar ist aber auch, dass in mehreren Bereichen A, B und C Dämpfungsmittel vorgesehen sind.

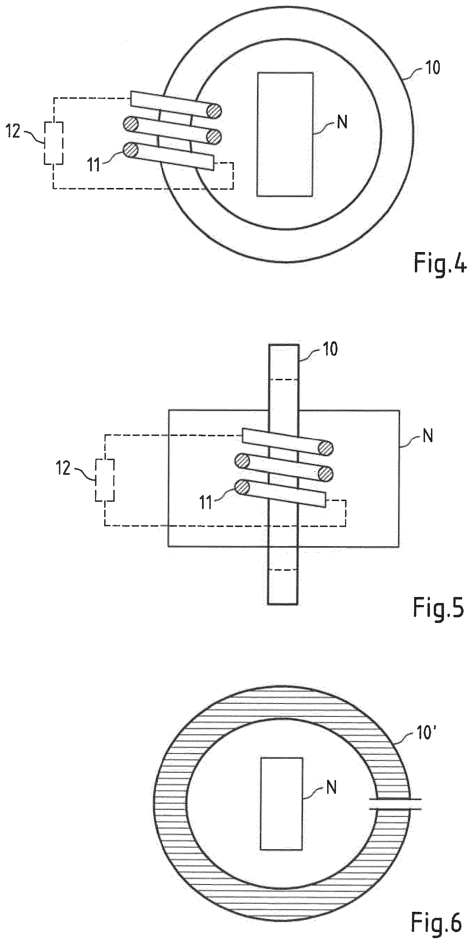

Die Fig. 4 und 5 zeigen nun einen magnetischen Kern aus weichmagnetischen Vollmaterial 10, vorzugsweise aus Ferrit, welcher einen Null-Leiter N umschließt und mindestens eine Spule 11 aufweist, welche über mindestens einen Serienwiderstand 12 verbunden bzw. kurzgeschlossen ist. Während Fig. 4 eine Schnittansicht senkrecht zur Längsachse des Null-Leiters N zeigt, ist in Fig. 5 eine Draufsicht auf den Null-Leiter N dargestellt. Der weichmagnetische Ring 10 umschließt den Null-Leiter N senkrecht zu dessen Längsausdehnung. Das im magnetischen Kern induzierte wechselnde Magnetfeld erzeugt in der Spule 11 eine Spannung, welche zu einem Stromfluss über den Serienwiderstand 12 führt. Der aus weichmagnetischen Vollmaterial, insbesondere Ferrit, bestehende magnetische Kern 10 weist dabei nur sehr geringe Wärmeverluste durch Induktion von magnetischen Wechselfeldern im magnetischen Kern auf, sodass die Verlustwärme im weichmagnetischen, beispielsweise ferritischen Ring gering bleibt. In dem Serienwiderstand 12 wird dann aufgrund der Dämpfung der Serienresonanz im Wesentlichen die Verlustwärme frei.

Der Serienwiderstand 12 wird daher bevorzugt auf nicht dargestellten Kühlmitteln angeordnet, welche die sichere Wärmeabgabe auf einfache Weise gewährleisten. Die Verwendung eines ferritischen Kerns 10 hat den Vorteil, dass die durch die Dämpfung der Serienresonanz entstehende Verlustwärme, gezielt an Kühlmittel übergeben werden kann. Darüber hinaus lässt sich über die Wahl des Serienwiderstands im Widerstandswert als auch über die Anzahl der Wicklungen der Spule auf dem magnetischen Kern ein optimiertes Dämpfungsverhalten in Bezug auf die zu dämpfende Serienresonanz einstellen. Die Anzahl der Wicklungen beträgt vorzugsweise unter 10, besonders bevorzugt 2 bis 6 Windungen.

Der in Fig. 4 und 5 dargestellte Serienwiderstand kann bevorzugt variabel in seinem Widerstandswert eingestellt werden. Hierdurch wird der Vorteil erzielt, dass beispielsweise am Ort der Installation einer Windenergieanlage nach der Montage der Serienwiderstand auf eine optimierte Dämpfung der Serienresonanz noch eingestellt werden kann. Gleiches gilt bei einem Nachrüsten einer bestehenden Vorrichtung zur Erzeugung elektrischer Energie.

Eine weitere, einfache Möglichkeit einen Serienwiderstand magnetisch in das Nullsystem einzukoppeln zeigt Fig. 6 in einer schematischen Schnittansicht. Hier ist ein magnetischer Kern 10' bestehend aus Elektroblech dargestellt. Der magnetische Kern weist einen definierten Spalt auf, so dass ein definierter magnetischer Widerstand eingestellt werden kann. Weiter ist der Null-Leiter dargestellt, welchen der magnetische Kern 10' umschließt.

Der so aufgebaute magnetische Kern 10' stellt bereits selbst den Serienwiderstand zur Verfügung, in dem während der Änderung der Magnetisierungsrichtung aufgrund der Serienresonanz, jeweils der magnetische Widerstand zu Verlustwärme und damit zu einer Dämpfung der Serienresonanz führt. Die entstehende Verlustwärme wird im gesamten magnetischen Kern 10' frei und muss in dem Fall ausreichend abgeführt werden. Der Vorteil des geblechten magnetischen Kerns 10' besteht darin, dass dieser kostengünstig ist und relativ frei in seiner geometrischen Form gewählt werden kann.

Besonders effektiv kann die Vorrichtung gemäß Fig. 3 eingesetzt werden, sofern die Serienresonanz der Verbindungsmittel im Nullsystem unterhalb von 500 kHz, vorzugsweise unterhalb von 150 kHz auftritt. Diese Frequenzbereiche werden über die üblicherweise in Windenergieanlagen vorgesehenen Netzfilter (dU/dt-Filter) nicht gedämpft. Die in Fig. 3 dargestellte Vorrichtung stellt eine sehr gute Dämpfung der Serienresonanz im Nullsystem der Verbindungsmittel 3 bereit.

Vorzugsweise wird dabei die Vorrichtung zur Erzeugung elektrischer Energie, insbesondere die Windenergieanlage derart betrieben, sodass zunächst mindestens eine Serienresonanz im Nullsystem der maschinenseitigen Verbindungsmittel 3 zwischen Generator 2 und Umrichter 4, 4', beispielsweise nach deren Montage oder auch im Vorfeld anhand einer Simulation ermittelt wird und abhängig von der ermittelten Serienresonanz ein Serienwiderstand 5, 6, 7, 8, 9 in das Nullsystem der Verbindungsmittel 3 magnetisch angekoppelt wird. Überspannungen, welche durch das Schaltverhalten der Umrichter im Nullsystem maschinenseitig induziert werden, werden hierdurch signifikant unterdrückt und ein verbessertes Schaltverhalten der Umrichter erzielt.

**Patentansprüche**

1.  Vorrichtung zur Erzeugung elektrischer Energie, insbesondere eine Windenergieanlage (1), mit mindesten einem Generator (2), wobei der Generator (2) elektrische Energie über mehrphasige, maschinenseitige Verbindungsmittel (3) bereitstellt und mit mindestens einem Umrichter (4, 4') mit Gleichspannungszwischenkreis über die mehrphasigen, maschinenseitigen Verbindungsmittel (3) elektrisch verbunden ist,
    **dadurch gekennzeichnet, dass**
    Mittel zur Dämpfung mindestens einer Serienresonanz (5, 6, 7, 8, 9) im Nullsystem der maschinenseitigen Verbindungsmittel (3) zwischen Generator (2) und Umrichter (4, 4') vorgesehen sind.

2.  Vorrichtung nach Anspruch 1,
    **dadurch gekennzeichnet, dass**
    die Mittel zur Dämpfung der Serienresonanz im Nullsystem (5, 6, 7, 8, 9) mindestens einen für das Nullsystem der maschinenseitigen Verbindungsmittel (3) wirksamen, magnetisch eingekoppelten Serienwiderstand (10', 12) aufweisen.

3.  Vorrichtung nach Anspruch 1 oder 2,
    **dadurch gekennzeichnet, dass**
    der mindestens eine magnetisch eingekoppelte Serienwiderstand (10', 12) im Nullsystems einen elektrischen Widerstand R aufweist, für den gilt:

$$R = d * \sqrt{\frac{L}{C}} \quad , \tag{1}$$

wobei L die Induktivität und C die Kapazität der maschinenseitigen Verbindungsmittel (3) zwischen Generator (2) und Umrichter (4, 4') sind und d der Proportionalitätsfaktor der Dämpfung ist, und für d gilt:

$$0{,}25 \le d \le 1{,}8 \,. \tag{2}$$

4.  Vorrichtung nach einem der Ansprüche 1 bis 3,
    **dadurch gekennzeichnet, dass**
    der mindestens eine magnetisch eingekoppelte Serienwiderstand (10', 12) im Nullsystem der maschinenseitigen Verbindungsmittel (3) über mindestens einen magnetischen Kern (10, 10') eingekoppelt ist.

5.  Vorrichtung nach Anspruch 4,
    **dadurch gekennzeichnet, dass**
    der mindestens eine magnetische Kern (10', 11) den Null-Leiter (N, N') der maschinenseitigen Verbindungsmittel (3) zwischen Umrichter (4, 4') und Generator (2) zur magnetischen Einkopplung des Serienwiderstands (10', 12) umschließt.

6.  Vorrichtung nach einem der Ansprüche 4 und 5,
    **dadurch gekennzeichnet, dass**
    der Null-Leiter (N, N') der maschinenseitigen Verbindungsmittel (3) zumindest bereichsweise als Kabel (A, C) und/oder Schiene (B) ausgebildet ist und der mindestens eine magnetische Kern (10, 10') mindestens in einem dieser Bereiche angeordnet ist.

7.  Vorrichtung nach einem der Ansprüche 4 bis 6,
    **dadurch gekennzeichnet, dass**

der mindestens eine magnetische Kern (10') Elektroblech aufweist, wobei optional ein Luftspalt zur Bereitstellung eines spezifischen magnetischen Widerstands des magnetischen Kerns (10') vorgesehen ist.

8. Vorrichtung nach einem der Ansprüche 4 bis 7,
**dadurch gekennzeichnet, dass**
der mindestens eine magnetische Kern (10) aus weichmagnetischem Vollmaterial, vorzugsweise Ferrit besteht, wobei der mindestens eine magnetische Kern (10) mindestens eine Spule (11) aufweist, deren Wicklungsanschlüsse über mindestens einen Serienwiderstand (12) miteinander verbunden sind.

9. Vorrichtung nach einem der Ansprüche 1 bis 8,
**dadurch gekennzeichnet, dass**
der mindestens eine Serienwiderstand (12) auf Kühlmitteln angeordnet ist und optional im Widerstandswert variabel einstellbar ist.

10. Vorrichtung nach einem der Ansprüche 1 bis 9,
**dadurch gekennzeichnet, dass**
die maschinenseitigen Verbindungsmittel (3) so dimensioniert sind, dass die Serienresonanz der Verbindungsmittel (3) im Nullsystem unterhalb von 500 kHz, bevorzugt unterhalb von 150 kHz auftritt.

11. Vorrichtung nach einem der Ansprüche 1 bis 10,
**dadurch gekennzeichnet, dass**
die Vorrichtung eine Windenergieanlage (1) ist, wobei die Windenergieanlage als Generator (2) eine doppeltgespeiste Asynchronmaschine oder einen Synchrongenerator aufweist.

12. Verfahren zum Betreiben einer Vorrichtung zur Erzeugung elektrischer Energie, insbesondere einer Windenergieanlage (1) nach einem der Ansprüche 1 bis 11,
**dadurch gekennzeichnet, dass**
mindestens eine Serienresonanz im Nullsystem der maschinenseitigen Verbindungsmittel (3) zwischen Generator (2) und Umrichter (4, 4') ermittelt wird, abhängig von der ermittelten Serienresonanz ein Serienwiderstand (10', 12) zur Dämpfung dieser Serienresonanz bestimmt wird und dieser Serienwiderstand (10', 12) in das Nullsystem magnetisch einkoppelt wird.

**Claims**

1. A device for generating electrical energy, in particular a wind energy installation (1), with at least one generator (2), wherein the generator (2) provides electrical energy via multiphase, machine-side connection means (3) and is electrically connected to at least one converter (4, 4') with DC link via the multiphase, machine-side connection means (3),
**characterized in that**
means for damping at least one series resonance (5, 6, 7, 8, 9) in the zero system of the machine-side connection means (3) between generator (2) and converter (4, 4') are provided.

2. The device according to claim 1,
**characterized in that**
the means for damping the series resonance in the zero system (5, 6, 7, 8, 9) present at least one series resistor (10', 12) coupled-in magnetically which is effective for the zero system of the machine-side connection means (3).

3. The device according to claim 1 or 2,
**characterized in that**
the at least one series resistor (10', 12) coupled-in magnetically in the zero system has an electrical resistance R for which holds:

$$R = d * \sqrt{\frac{L}{C}} \ , \qquad\qquad (1)$$

wherein L is the inductance and C is the capacitance of the machine-side connection means (3) between generator (2) and converter (4, 4') and d is the proportionality factor of the damping, and for d holds:

$$0{,}25 \leq d \leq 1{,}8 \,. \tag{2}$$

4. The device according to any one of claims 1 to 3,
**characterized in that**
the at least one series resistor (10', 12) coupled-in magnetically in the zero system of the machine-side connection means (3) is coupled-in via at least one magnetic core (10, 10').

5. The device according to claim 4,
**characterized in that**
the at least one magnetic core (10', 11) encloses the neutral conductor (N, N') of the machine-side connection means (3) between converter (4, 4') and generator (2) for magnetically coupling-in the series resistor (10', 12).

6. The device according to any one of claims 4 and 5,
**characterized in that**
the neutral conductor (N, N') of the machine-side connection means (3) is formed at least in regions as a cable (A, C) and/or rail (B) and the at least one magnetic core (10, 10') is arranged at least in one of these regions.

7. The device according to any one of claims 4 to 6,
**characterized in that**
the at least one magnetic core (10') presents electrical steel, wherein optionally an air gap to provide a specific magnetic resistance of the magnetic core (10') is provided.

8. The device according to any one of claims 4 to 7,
**characterized in that**
the at least one magnetic core (10) is made of magnetically soft solid material, preferably ferrite, wherein the at least one magnetic core (10) presents at least one coil (11) whose winding terminals are connected to one another via at least one series resistor (12).

9. The device according to any one of claims 1 to 8,
**characterized in that**
the at least one series resistor (12) is arranged on cooling means and optionally its resistance value is variably adjustable.

10. The device according to any one of claims 1 to 9,
**characterized in that**
the machine-side connection means (3) are dimensioned such that the series resonance of the connection means (3) in the zero system occurs below 500 kHz, preferably below 150 kHz.

11. The device according to any one of claims 1 to 10,
**characterized in that**
the device is a wind energy installation (1), wherein the wind energy installation presents as generator (2) a double-fed asynchronous machine or a synchronous generator.

12. A method for operating a device for generating electrical energy, in particular a wind energy installation (1) according to any one of claims 1 to 11,
**characterized in that**
at least one series resonance in the zero system of the machine-side connection means (3) between generator (2) and converter (4, 4') is determined, a series resistance (10', 12) for damping this series resonance is specified depending on the series resonance determined and this series resistance (10', 12) is coupled-in magnetically into the zero system.

**Revendications**

1. Un dispositif pour la production d'énergie électrique, en particulier une installation d'énergie éolienne (1), avec au moins un générateur (2), dans lequel le générateur (2) fournit d'énergie électrique via des moyens de connexion polyphasés, côté machine (3) et est relié électriquement à au moins un convertisseur (4, 4') avec circuit intermédiaire à tension continue via les moyens de connexion polyphasés, côté machine (3),
**caractérisé en ce que**
des moyens pour atténuer au moins une résonance en série (5, 6, 7, 8, 9) dans le système zéro des moyens de connexion côté machine (3) entre générateur (2) et convertisseur (4, 4') sont prévus.

2. Le dispositif selon la revendication 1,
**caractérisé en ce que**
les moyens pour atténuer la résonance en série dans le système zéro (5, 6, 7, 8, 9) présentent au moins une résistance en série (10', 12) introduit par couplage magnétique qui est effective pour le système zéro des moyens de connexion côté machine (3).

3. Le dispositif selon la revendication 1 ou 2,
**caractérisé en ce que**
l'au moins une résistance en série introduit par couplage magnétique (10', 12) dans le système zéro présente une résistance électrique R pour laquelle s'applique :

$$R = d * \sqrt{\frac{L}{C}} \ , \qquad\qquad (1)$$

L étant l'inductance et C étant la capacitance des moyens de connexion côté machine (3) entre générateur (2) et convertisseur (4, 4') et d étant le facteur de proportionnalité de l'atténuation, et pour d s'applique :

$$0{,}25 \le d \le 1{,}8 \ . \qquad\qquad (2)$$

4. Le dispositif selon l'une quelconque des revendications 1 à 3,
**caractérisé en ce que**
l'au moins une résistance en série introduit par couplage magnétique (10', 12) dans le système zéro des moyens de connexion côté machine (3) est introduit par couplage via au moins un noyau magnétique (10, 10').

5. Le dispositif selon la revendication 4,
**caractérisé en ce que**
l'au moins un noyau magnétique (10', 11) enclot le conducteur neutre (N, N') des moyens de connexion côté machine (3) entre convertisseur (4, 4') et générateur (2) pour l'introduction par couplage magnétique de la résistance en série (10', 12).

6. Le dispositif selon l'une quelconque des revendications 4 et 5,
**caractérisé en ce que**
le conducteur neutre (N, N') des moyens de connexion côté machine (3) est réalisé au moins par zones sous forme de câble (A, C) et/ou de rail (B) et l'au moins un noyau magnétique (10, 10') est disposé au moins dans l'une de ces zones.

7. Le dispositif selon l'une quelconque des revendications 4 à 6,
**caractérisé en ce que**
l'au moins un noyau magnétique (10') présente fer doux, dans lequel facultativement un entrefer pour fournir une résistance magnétique spécifique du noyau magnétique (10') est prévu.

8. Le dispositif selon l'une quelconque des revendications 4 à 7,
**caractérisé en ce que**
l'au moins un noyau magnétique (10) est constitué d'un matériau plein magnétique doux, de préférence de ferrite, dans lequel l'au moins un noyau magnétique (10) présente au moins une bobine (11) dont les raccordements du bobinage sont reliées entre elles par au moins une résistance en série (12).

9. Le dispositif selon l'une quelconque des revendications 1 à 8,
**caractérisé en ce que**

l'au moins une résistance en série (12) est disposée sur des moyens de refroidissement et facultativement sa valeur de résistance peut être réglée de manière variable.

10. Le dispositif selon l'une quelconque des revendications 1 à 9,
**caractérisé en ce que**
les moyens de connexion côté machine (3) sont dimensionnés de manière à ce que la résonance en série des moyens de connexion (3) dans le système zéro apparaisse en dessous de 500 kHz, de préférence en dessous de 150 kHz.

11. Le dispositif selon l'une quelconque des revendications 1 à 10,
**caractérisé en ce que**
le dispositif est une installation d'énergie éolienne (1), dans lequel l'installation d'énergie éolienne présente comme générateur (2) une machine asynchrone à double alimentation ou un générateur synchrone.

12. Un procédé pour l'opération d'un dispositif pour la production d'énergie électrique, en particulier d'une installation d'énergie éolienne (1) selon l'une quelconque des revendications 1 à 11,
**caractérisé en ce qu'**
au moins une résonance en série dans le système zéro des moyens de connexion côté machine (3) entre générateur (2) et convertisseur (4, 4') est déterminée, une résistance en série (10', 12) pour atténuer cette résonance en série est spécifiée en fonction de la résonance en série déterminée, et cette résistance en série (10', 12) est introduit par couplage magnétique dans le système zéro.

Fig.1

Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9500182 B2
- US 20150123402 A1
- DE 10156694 A1